# EUROPÄISCHE PATENTANMELDUNG

(11) **EP 2 636 290 A1**
(43) Veröffentlichungstag der Anmeldung: **11.09.2013**
(21) Anmeldenummer: 13002896.2
(22) Anmeldetag: 14.03.2011
(51) Int. Cl.: A01B 29/06, A01B 51/02, A01B 29/04

(54) **Landwirtschaftliches Anbaugerät**

(62) Teilanmeldung aus: 11002106.0
(71) Anmelder: Alois Pöttinger Maschinenfabrik Ges.m.b.H., 4710 Grieskirchen (AT)
(72) Erfinder: Baldinger, Markus, 4084 St. Agatha (AT); Baldinger, Martin, 4722 Peuerbach (AT)
(74) Vertreter: Thoma, Michael

(57) **Zusammenfassung**

Die vorliegende Erfindung betrifft ein landwirtschaftliches Anbaugerät mit einer Anbauvorrichtung (3) wie Anbaubock (5) oder Deichsel (4) zum Anbau an einen Schlepper (1), zumindest einem Arbeitsaggregat (6) zur Boden-, Ernte- und/oder Saatgutbearbeitung, sowie einem Fahrwerk (7) mit zumindest einem Radelement (9) zur Abstützung am Boden, wobei an dem Anbaugerät zumindest ein Radantrieb (10) mit einem elektrischen und/oder druckfluidbetriebenen Motor (11) zum Antreiben des zumindest einen Radelements (9) des Anbaugeräts vorgesehen ist. Erfindungsgemäß zeichnet sich das Anbaugerät dadurch aus, dass eine Steuervorrichtung (14) zur Steuerung der Drehzahl und/oder des Antriebsmoments des Motors (11) des Radantriebs (10) in Abhängigkeit zumindest eines Anbaugerätebetriebsparameters vorgesehen ist, wobei die Steuervorrichtung (14) Erfassungsmittel (17) zur Erfassung der Hangneigung und/oder einer Arbeitstiefe und/oder einer Spurtiefe und/oder eines Ladegewichts des Anbaugeräts sowie auf die genannten Erfassungsmittel (17) ansprechende Steuermittel zur Steuerung des Motors (11) hinsichtlich Drehzahl und/oder Antriebsmoment in Abhängigkeit der erfassten Hangneigung und/oder Arbeitstiefe und/oder der erfassten Spurtiefe und/oder des erfassten Ladegewichts aufweist.

## Beschreibung

Die vorliegende Erfindung betrifft ein landwirtschaftliches Anbaugerät mit einer Anbauvorrichtung wie Anbaubock oder Deichsel zum Anbau an einen Schlepper, zumindest einem Arbeitsaggregat zur Boden-, Ernte- und/oder Saatgutbearbeitung, sowie einem Fahrwerk mit zumindest einem Radelement zur Abstützung am Boden. Ein solches Anbaugerät kann hierbei insbesondere als Ladewagen mit einer Aufsammelvorrichtung zum Aufsammeln von Erntegut vom Boden, als Mähwerk, Schwader, Heumaschine, oder als Walzen-Bestellkombination, beispielsweise umfassend eine Sävorrichtung in Kombination mit einem Bodenbearbeitungsaggregat wie beispielsweise Scheibenegge, Grubber oder dergleichen und einer Walze beispielsweise in Form einer Packerradwalze, ausgebildet sein.

Derartige landwirtschaftliche Anbaugeräte werden üblicherweise mittels einer Deichsel oder einem Anbaubock, an dem eine Dreipunktanlenkung befestigbar ist, an einen Schlepper angebaut, der das jeweilige Anbaugerät hinter sich herzieht oder bei bestimmten Ausbildungsformen auch vor oder neben sich herschiebt. Größere Anbaugeräte mit größerer Arbeitsbreite oder größerem Gewicht haben hierbei regelmäßig ein eigenes Fahrwerk, mittels dessen sie sich am Boden abstützen, da ansonsten die in den Schlepper eingeleiteten Kräfte zu groß wären. Je nach Ausbildung des Anbaugeräts kann das Fahrwerk unterschiedlich ausgebildet sein, wobei regelmäßig zumindest ein Radelement vorgesehen ist, welches auf dem Boden abrollt und ggf. neben der Abstützfunktion auch noch weitere Funktionen wahrnehmen kann. Beispielsweise werden bei Bestellkombinationen mit Sävorrichtung und Bodenbearbeitungsaggregat oftmals Walzen beispielsweise in Form von Packerradwalzen verwendet, um einerseits zumindest einen Teil des Gewichts der Bestellkombination abzufangen und andererseits den Boden zu bearbeiten, insbesondere zu walzen. Selbstverständlich können die Radelemente solcher Fahrwerke auch zum Lenken oder Spurhalten dienen. Hierbei sind sowohl einachsige als auch mehrachsige Fahrwerke bekannt, wobei ggf. ein Radelement auch in Form von Zwillingsrädern ausgebildet sein kann, wie dies beispielsweise bisweilen bei Ladewagen der Fall ist.

Um höhere Flächenleistungen zu erzielen, werden in jüngerer Zeit immer größere Anbaugeräte verwendet, die eine größere Arbeitsbreite besitzen, womit jedoch gleichzeitig auch regelmäßig ein höheres Gewicht einhergeht. Dementsprechend werden immer größere und stärkere Schlepper benötigt, um die notwendige Zug- und Antriebskraft, die für die Anbaugeräte benötigt wird, bereitstellen zu können. Da jedoch in vielen Betrieben nicht mit jedem neuen Anbaugerät auch gleichzeitig ein neuer, passender Schlepper gekauft wird, ist der vorhandene kleinere Schlepper oftmals ein Hinderungsgrund, ein an sich gewünschtes größeres Anbaugerät zu kaufen oder leihweise einzusetzen. Zum anderen wird nicht für jedes Anbaugerät ein gleichermaßen großer und starker Schlepper benötigt, so dass dann, wenn der Schlepper auf das größte Anbaugerät eines Betriebes abgestimmt ist, die anderen Anbaugeräte mit einem an sich zu großen und starken Schlepper betrieben werden.

Hiervon abgesehen ist der Betrieb solcher Anbaugeräte mit großen und leistungsstarken Schleppern bei bestimmten Boden- und Geländeverhältnissen wenig bodenschonend. Insbesondere bei sehr feuchten Böden oder stärker geneigten Hanglagen kommt es bei der Feldbestellung mit leistungsstarken Schleppern oft zu übermäßigem Radschlupf am Schlepper, wodurch die Bodenoberfläche malträtiert wird. Ferner erweist sich bei solchen schwierigen Boden- und Geländeverhältnissen die Spurtreue des Anbaugeräts und auch des Schleppers als problematisch. Wenn bei schrägen Hangfahrten auf tiefen Böden das Anbaugerät aus der Spur zieht und trotzdem hohe Zugkräfte benötigt, wird auch der Schlepper aus der Spur gezogen, wodurch es zu einer driftenden Fahrt mit hohem Schlupf an den Antriebsrädern des Schleppers und damit zu einer starken Belastung der Bodenoberfläche kommt.

Es wurde daher bereits vorgeschlagen, größere Bodenbearbeitungsgeräte als Selbstfahrer auszubilden, bei denen ggf. mehrere Achsen angetrieben sind. Die DE 10 2004 012 791 A1 zeigt beispielsweise eine selbstfahrende Bestellkombination umfassend eine Sävorrichtung in Kombination mit einer Kreiselegge und einer der Kreiselegge nachlaufenden Walze, bei der die auf dem Boden laufende Walze selbstangetrieben ist.

Dennoch werden weiterhin an einen Schlepper anbaubare Anbaugeräte gegenüber solchen Selbstfahrern bevorzugt, da die Vorteile solcher Anbaugeräte gegenüber Selbstfahrern evident sind. Der Antrieb des Schleppers sowie dessen Versorgungsfunktionen wie beispielsweise die Bereitstellung von Hydraulikdruck, mechanischer Antriebswelle von der Zapfwelle her etc. können gemeinsam für verschiedene Geräte genutzt werden, so dass sie nicht in jedes Anbaugerät individuell implementiert werden müssen, wodurch die entsprechenden Anbaugeräte gegenüber Selbstfahrern beträchtlich billiger sind.

Hiervon ausgehend liegt der vorliegenden Erfindung die Aufgabe zugrunde, ein verbessertes landwirtschaftliches Anbaugerät der eingangs genannten Art zu schaffen, das Nachteile des Standes der Technik vermeidet und Letzteren in vorteilhafter Weise weiterbildet. Insbesondere soll das Ziehen bzw. Schieben eines Anbaugeräts durch einen Schlepper hinsichtlich Schlupf und Spurtreue bzw. Driften an Hanglagen verbessert und damit ein bodenschonenderer Arbeitsbetrieb mit verbesserten Arbeitsergebnissen erzielt werden.

Erfindungsgemäß wird diese Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, den Grundbedarf an Zugkraft und Antriebsleistung weiterhin durch den Schlepper aufzubringen, am Anbaugerät jedoch zumindest an einem Radelement einen Hilfsantrieb vorzusehen, der einen Teil der für das Anbaugerät notwendigen Antriebskraft aufbringen und hierdurch die vom Schlepper benötigte Zugkraft verringern kann. Hierdurch werden einerseits weiterhin die Antriebskraft und die Funktionalitäten eines gemeinsamen Schleppers für mehrere Anbaugeräte genutzt und eine vollständige Implementierung entsprechender Fahrantriebe, Lenkvorrichtungen etc. in ein einzelnes Anbaugerät vermieden. Andererseits wird durch den zumindest teilweisen Selbstantrieb des Anbaugeräts das Zugkraftverhalten am Schlepper deutlich verbessert, wodurch Radschlupf am Schlepper vermieden wird und ggf. auch ein kleinerer Schlepper mit niedrigerer Leistung verwendet werden kann. Zudem verbessert sich das Spurverhalten insbesondere bei Schrägfahrten am Hang. Erfindungsgemäß ist an dem Anbaugerät zumindest ein Radantrieb mit einem elektrischen und/oder druckfluidbetriebenen Motor zum Antreiben des zumindest einen Radelements des Anbaugeräts vorgesehen. Durch einen Elektro- oder Hydro- bzw. Pneumatikmotor kann die Antriebsenergie ohne aufwändigen mechanischen Antriebsstrang, der von der Zapfwelle des Schleppers her angetrieben werden müsste, an das anzutreibende Rad gebracht werden, da lediglich eine Strom- oder Druckleitung vorzusehen ist. Dementsprechend kann für das Anbaugerät insgesamt betrachtet eine kompakte und leichte Bauweise beibehalten werden. Zudem kann insbesondere ein Elektromotor, aber auch ein Hydromotor mit einfachen Mitteln hinsichtlich Drehzahl und Antriebsmoment unabhängig vom Betriebspunkt des Schleppers gesteuert werden.

In Weiterbildung der Erfindung kann der Radantrieb als Einzelradantrieb ausgebildet sein, wobei je nach Ausbildung des Anbaugeräts ggf. mehrere Radelemente mit jeweils einem Einzelradantrieb angetrieben werden können, so dass das Anbaugerät mehrere Einzelradantriebe besitzt. Alternativ ist es jedoch auch möglich, einen gemeinsamen Motor zum Antrieb mehrerer gruppenweise zusammengefasster Radelemente zu verwenden, wobei in diesem Fall vorteilhafterweise von dem gemeinsamen Motor ein verzweigter Antriebsstrang beispielsweise zu den Radelementen rechts und links an einer gemeinsamen Achse vorgesehen sein kann. Bevorzugt ist jedoch ein Einzelradantrieb in der vorgenannten Weise, bei dem jedem Radelement ein separater Einzelradantrieb zugeordnet ist, wobei hier sinnvollerweise als Radelement auch ein Zwillingsrad verstanden werden kann. Radelement meint in diesem Fall dann die an einem Fahrwerkspunkt gemeinsam aufgehängten Räder. Alternativ kann das Anbaugerät jedoch auch nur ein angetriebenes Rad besitzen, dem dann ebenfalls ein elektrischer oder hydraulischer, ggf. auch pneumatischer Motor als Antrieb zugeordnet ist.

Grundsätzlich kann der Motor hierbei in verschiedener Weise mit dem anzutreibenden Radelement gekoppelt sein, wobei beispielsweise ein von dem Rad beabstandet platzierter Motor mittels einer Antriebswelle das Rad antreiben kann. In Weiterbildung der Erfindung jedoch ist der jeweilige Radantrieb als Radnabenantrieb ausgebildet, bei dem der Motor ggf. zusammen mit einer Getriebestufe oder einem Motorgetriebe unmittelbar an der Radnabe sitzend angeordnet ist und vorteilhafterweise in den Radnabenkorpus integriert sein kann. Hierdurch werden entsprechende Antriebsstrangteile und Übertragungselemente wie längere Antriebswellen eingespart, wobei die einfache Energiezufuhr über Elektroleitungen oder Fluiddruckleitungen voll zum Tragen kommen. Von Vorteil ist es hierbei, wenn der Radantrieb lediglich einen Hilfsantrieb für das Anbaugerät bildet, der nur einen Teil der für das Anbaugerät benötigten Antriebskraft aufbringt, da der vorzugsweise größere Teil der Antriebsenergie vom Schlepper her kommt, so dass der Radantrieb am Anbaugerät lediglich unterstützend wirkt. Je nach Ausbildung des Anbaugerätes und je nach Betriebssituation kann es jedoch auch vorteilhaft sein, den größeren Teil der Antriebsenergie für das Anbaugerät durch dessen eigenen Radantrieb aufzubringen. Um eine kleine Dimensionierung des Radantriebs am Anbaugerät beibehalten zu können, kann es jedoch vorteilhaft sein, diesen Radantrieb nur als Zusatzantrieb auszubilden und den größeren Teil der benötigten Zugkraft vom Schlepper her aufzubringen.

In Weiterbildung der Erfindung kann als angetriebenes Radelement ein Walzenelement, beispielsweise in Form einer Packerradwalze, vorgesehen sein. Das Antreiben der Walze kann insbesondere bei Bestellkombinationen vorteilhaft sein, bei denen die Walze nur einen Teil des Anbaugeräts bzw. nur eines von mehreren Arbeitsaggregaten des Anbaugeräts bildet, da insbesondere bei solchen Kombinationsgeräten oftmals aufgrund des hohen Gewichts höhere Antriebskräfte aufgebracht werden müssen und die Spurführung bei Hangfahrten problematisch ist. In Weiterbildung der Erfindung kann das Walzenelement in Kombination mit einem Bodenbearbeitungsaggregat wie beispielsweise einer Scheiben- oder Kreiselegge oder einem Grubber und/oder in Kombination mit einer Sävorrichtung vorgesehen sein.

Ist ein solches Walzenelement anzutreiben, kann in vorteilhafter Weiterbildung der Erfindung der Motor ggf. zusammen mit einem Getriebe im Inneren des Walzenkorpus angeordnet sein, wodurch einerseits eine Platz sparende Anordnung ohne Beeinträchtigung der Arbeitsfunktion der Walze und andererseits eine vor äußeren Beeinträchtigungen geschützte Anordnung des Elektromotors erreicht wird.

Das Anbaugerät kann in Weiterbildung der Erfindung jedoch auch eine andere Ausbildung haben. So ist insbesondere auch bei Ladewagen ein Radantrieb durch einen Elektromotor oder Druckfluidmotor von besonderem Vorteil, da Ladewagen regelmäßig aufgrund ihrer Zuladung hohe Ladegewichte erreichen, die bei Fahrten auf schweren Böden hohe Zugkräfte erforderlich machen und bei Hangfahrten auf feuchten Böden Spurprobleme mit Querversatz des Schleppers bewirken.

In Weiterbildung der Erfindung kann das Anbaugerät mit jeweils zumindest einem Radantrieb umfassend einen elektrischen oder einen druckfluidbetriebenen Motor jedoch auch in Form anderer Bodenbearbeitungs- oder Erntegutbearbeitungsgeräte ausgebildet sein, beispielsweise in Form einer Heuwerbungsmaschine wie Schwader oder Zetter, die in größeren Ausführungen regelmäßig mit entsprechenden Fahrwerken versehen sind, oder in Form einer Mähmaschine, die bisweilen auch mit außermittigem Deichselanlenkpunkt betrieben werden und dann besondere Spurprobleme zeigen bzw. bei einem entsprechenden Radantrieb besondere Vorteile zeigen.

Unabhängig von der jeweiligen Ausbildung des Anbaugeräts kann der Radantrieb in verschiedener Weise gesteuert werden. Um einen einfache Ausbildung der Steuerung zu erreichen, kann in Weiterbildung der Erfindung der jeweilige Radantrieb auf ein konstantes Antriebsmoment eingesteuert werden, insbesondere dann, wenn hierdurch nur ein kleinerer Teil der benötigten Zugkraft aufgebracht wird und der Radantrieb lediglich einen unterstützenden Hilfsantrieb bildet, während die Hauptzugkraft weiterhin vom Schlepper aufgebracht wird.

In Weiterbildung der Erfindung jedoch können für die Steuerung des Radantriebs verschiedene Betriebs- oder Feldparameter berücksichtigt werden, um das Antriebsmoment und/oder die Drehzahl des Radantriebs an verschiedene Betriebsbedingungen anzupassen. In Weiterbildung der Erfindung ist hierfür eine Steuervorrichtung zur Steuerung der Drehzahl und/oder des Antriebsmoments des Motors des Radantriebes in Abhängigkeit zumindest eines Schlepperbetriebsparameters und/oder zumindest eines Boden- bzw. Geländeparameters und/oder zumindest eines Anbaugeräte-Betriebsparameters vorgesehen, wobei die genannte Steuervorrichtung elektrisch ausgebildet sein und einen Mikroprozessor aufweisen kann. Bei Verwendung eines druckfluidbetriebenen Motors kann die Steuervorrichtung alternativ oder zusätzlich auch entsprechende Druckkreis-Steuerelemente umfassen.

Insbesondere kann die Steuervorrichtung das Antriebsmoment und/oder die Drehzahl des Radantriebs des Anbaugerätes in Abhängigkeit eines am Schlepper auftretenden Schlepperradschlupfs und/oder in Abhängigkeit der vom Schlepper aufgebrachten Schlepperzugkraft variieren. Hierzu kann die Steuervorrichtung Erfassungsmittel umfassen, die den Schlepperradschlupf und/oder die Schlepperzugkraft bestimmen und/oder überwachen. Der Schlepperradschlupf kann beispielsweise in an sich bekannter Weise durch Raddrehzahlsensoren, ggf. in Verbindung mit einem Geschwindigkeitssensor bestimmt werden. Die Schlepperzugkraft kann beispielsweise mittels Kraftsensoren an der Deichsel oder dem Anbaubock des Anbaugeräts bestimmt werden, wobei ggf. auch Leistungsdaten des Schlepperantriebs mit geeigneten Sensoren herangezogen werden können.

Die Steuervorrichtung variiert hierbei vorteilhafterweise die Antriebsleistung des Radantriebs am Anbaugerät dergestalt, dass dann, wenn am Schlepper Radschlupf auftritt oder ein bestimmtes Maß erreicht oder überschreitet und/oder wenn die Schlepperzugkraft ein bestimmtes Maß erreicht oder überschreitet, die Antriebsleistung des Radantriebs am Anbaugerät erhöht oder ggf. auch erst zugeschaltet wird. Beispielsweise kann in einem Normalbetrieb das Anbaugerät ohne Antriebsleistung des Radantriebs allein vom Schlepper her gezogen werden und erst dann, wenn am Schlepper Radschlupf auftritt oder die Zugkraft ein bestimmtes Maß erreicht, der Radantrieb eingeschaltet werden. Alternativ kann auch permanent mit Unterstützung des Radantriebs gefahren werden, wobei vorteilhafterweise in beiden Betriebsmodi die Antriebsleistung des Radantriebs des Anbaugeräts erhöht wird, wenn Radschlupf am Schlepper zunimmt bzw. die Schlepperzugkraft zunimmt.

Alternativ oder zusätzlich kann die Steuervorrichtung die Antriebsleistung des Radantriebs am Anbaugerät auch unter Berücksichtigung der Geländeformation, insbesondere der Hangneigung steuern. In einfachster Ausbildung kann ein Zuschalten des Radantriebs bei hügeligem oder geneigtem Gelände vorgesehen sein, während bei ebenem Gelände ohne zusätzlichen Radantrieb am Anbaugerät gearbeitet wird. In Weiterbildung der Erfindung kann jedoch auch eine feinsinnigere Berücksichtigung der Geländeformation realisiert sein, insbesondere dahingehend, dass eine Hangneigung des Geländestücks erfasst wird, auf dem das Anbaugerät gerade fährt. Erreicht die Hangneigung betragsmäßig und/oder richtungsmäßig einen vorbestimmten Wert oder überschreitet diesen vorbestimmten Wert, kann die Antriebsleistung des Radantriebs am Anbaugerät hochgefahren werden. Vorteilhafterweise kann hierbei vorgesehen sein, dass mit zunehmend stärker werdender Hangneigung die Antriebsleistung des Radantriebs stufenweise oder kontinuierlich erhöht wird. In Weiterbildung der Erfindung kann hierbei die Richtung der Hangneigung berücksichtigt werden, insbesondere dahingehend, dass bei Bergauffahrten ein positives Antriebsmoment zugeschaltet wird, während bei Bergabfahrten ein negatives Antriebsmoment zugeschaltet wird, um das Anbaugerät zu bremsen. In Weiterbildung der Erfindung besitzt die Steuervorrichtung hierzu Erfassungsmittel zur Erfassung der Hangneigung des jeweils befahrenen Geländes sowie auf diese Hangneigungs-Erfassungsmittel ansprechende Steuermittel, um das Antriebsmoment und/oder die Drehzahl des Motors unter Berücksichtigung der erfassten Hangneigung zu variieren.

Alternativ oder zusätzlich kann die Steuervorrichtung eine Arbeitstiefe und/oder eine Spurtiefe und/oder das Ladegewicht des Anbaugeräts für die Steuerung der Antriebsleistung des Radantriebs berücksichtigen. Die Steuervorrichtung kann hierzu geeignete Erfassungsmittel besitzen, die die genannten Anbaugeräte-Betriebsparameter bestimmen. Die Arbeitstiefe von Bodenbearbeitungswerkzeugen können beispielsweise über Wegmesssensoren bestimmt werden, die die Stellglieder zur Einstellung der Arbeitstiefe überwachen. Die Spurtiefe des Anbaugeräts kann beispielsweise mittels optischer Sensoren überwacht werden, die bestimmen, wie tief die Räder des Fahrwerks des Anbaugeräts in den Boden einsinken, wobei ggf. auch das Einsinken der Räder des Schleppers in den Boden überwacht werden kann. Das Ladegewicht des Anbaugeräts kann in an sich bekannter Weise über Gewichtssensoren am Maschinenrahmen und/oder am Fahrwerk des Anbaugeräts bestimmt werden.

Vorteilhafterweise berücksichtigt die Steuervorrichtung die vorgenannten Betriebsparameter Arbeitstiefe und/oder Spurtiefe und/oder Ladegewicht dahingehend, dass die Antriebsleistung des Radantriebs zugeschaltet oder erhöht wird, wenn zumindest einer der vorgenannten Betriebsparameter ein vorbestimmtes Maß erreicht oder überschreitet, wobei die Antriebsleistung des Radantriebs vorzugsweise kontinuierlich oder stufenweise erhöht werden kann, wenn die Arbeitstiefe und/oder die Spurtiefe und/oder das Ladegewicht zunehmen.

Nach einer vorteilhaften Ausführung der Erfindung kann der Radantrieb bzw. dessen Motor nicht nur als Antrieb genutzt werden, sondern auch als Generator betrieben werden, um in Betriebsphasen, in denen keine zusätzliche Antriebsenergie am Anbaugerät benötigt wird, Energie zu erzeugen und in das Bordnetz bzw. einen Speicher einzuspeisen.

Hierbei können verschiedene Betriebsphasen als Generatorbetriebsphasen genutzt werden. Insbesondere kann der Straßentransportbetrieb und/oder der Nicht-Arbeitsbetrieb, in dem die bestimmungsgemäße landwirtschaftliche Funktion nicht ausgeführt wird, als Generatorbetriebsphase genutzt werden. Regelmäßig treten die eingangs geschilderten Schlupf- und Spurhalteprobleme im Straßenbetrieb nicht auf, so dass hier auf die zusätzliche Antriebsleistung des anbaugeräteseitigen Radantriebs verzichtet werden kann. Wird das Anbaugerät über die Straße transportiert, kann der Elektromotor des Radantriebs elektrischen Strom generieren, der dann in das Bordnetz des Schleppers eingespeist wird oder in einer Batterie gespeichert wird. Alternativ oder zusätzlich können auch Bremsphasen, in denen das Anbaugerät und/oder der Schlepper zu bremsen ist, als Generatorphasen genutzt werden, wobei dies unabhängig davon erfolgen kann, ob das Anbaugerät auf der Straße transportiert wird oder auf dem Feld arbeitet. Vorteilhafterweise kann in einem solchen Bremsbetrieb die vom Motor aufgebrachte Bremskraft in Form eines negativen Antriebsmomentes der Höhe nach variierend insbesondere in Abhängigkeit der benötigten Bremskraft gesteuert werden.

Hierzu kann die Steuervorrichtung eine Generator-Betriebssteuervorrichtung umfassen, die den Generatorbetrieb des Motors steuert. Geeignete Erfassungsmittel können hierbei bestimmen, ob das Anbaugerät sich im Straßentransportbetrieb befindet. Hierzu können beispielsweise Sensoren vorgesehen sein, die die Fahrgeschwindigkeit und/oder die Stellung der Arbeitsaggregate überwachen. Alternativ oder zusätzlich können Erfassungsmittel zum Bestimmen einer Bremsphase vorgesehen sein, beispielsweise in Form eines Zugkraftsensors, der die Zug- oder Druckkraft im Bereich der Deichsel misst. Schiebt das Anbaugerät von hinten auf den Schlepper, kann davon ausgegangen werden, dass zu bremsen ist. In diesem Fall kann der Antriebsmotor als Generator betrieben werden.

Die Erfindung wird nachfolgend anhand bevorzugter Ausführungsbeispiele und zugehöriger Zeichnungen näher erläutert. In den Zeichnungen zeigen:

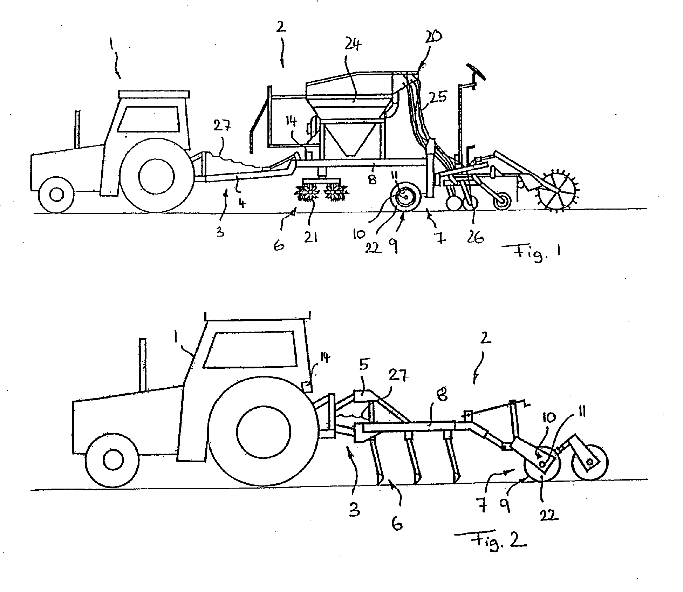

- Fig. 1:: eine schematische Seitenansicht eines von einem Schlepper gezogenen landwirtschaftlichen Anbaugeräts in Form einer Bestellkombination umfassend eine Sävorrichtung, ein Bodenbearbeitungsaggregat sowie eine Walze, die von einem Randantrieb mit einem Elektromotor angetrieben ist,
- Fig. 2:: eine schematische Seitenansicht eines von einem Schlepper gezogenen landwirtschaftlichen Anbaugeräts in Form eines Bodenbearbeitungs-Kombinationsgeräts nach einer weiteren vorteilhaften Ausführung der Erfindung, wobei das Anbaugerät eine Grubbereinheit sowie eine nachlaufende Walze aufweist, die von einem Radantrieb mit einem Elektromotor antreibbar ist,

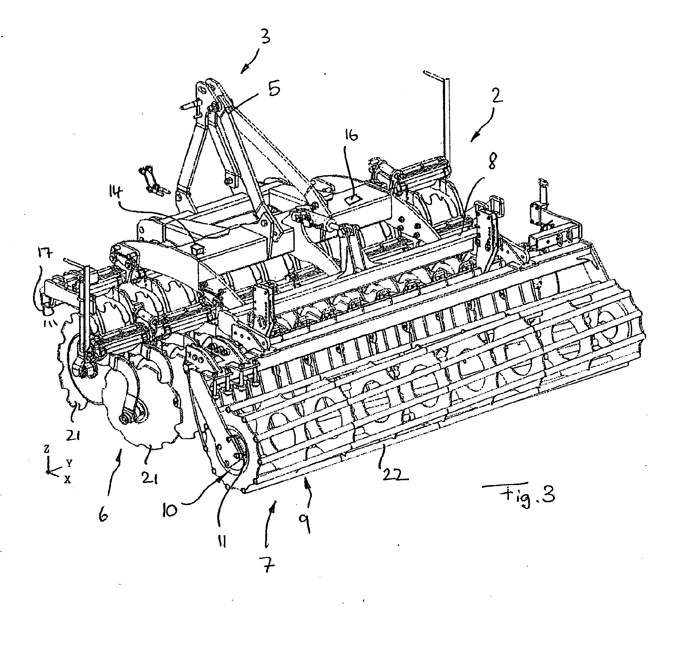

- Fig. 3:: eine schematische, perspektivische Darstellung eines an einen Schlepper anbaubaren landwirtschaftlichen Anbaugeräts nach einer weiteren vorteilhaften Ausführung der Erfindung, wobei das Anbaugerät eine Scheibeneggeneinheit sowie ein nachlaufendes Walzenelement umfasst, das von einem Radantrieb mit einem Elektromotor antreibbar ist,

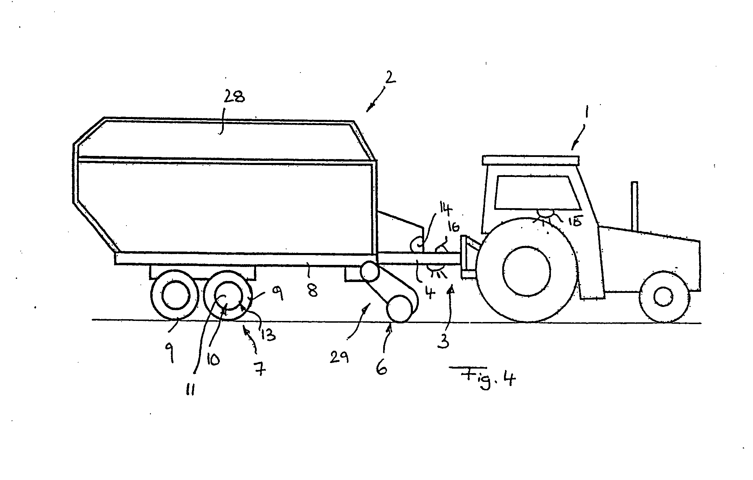

- Fig. 4:: eine schematische Seitenansicht eines von einem Schlepper gezogenen landwirtschaftlichen Anbaugeräts in Form eines Ladewagens nach einer weiteren vorteilhaften Ausführung der Erfindung, wobei der Ladewagen ein zweiachsiges Fahrwerk mit Laufrädern aufweist, die von jeweils einem Radantrieb mit einem Elektromotor antreibbar sind,

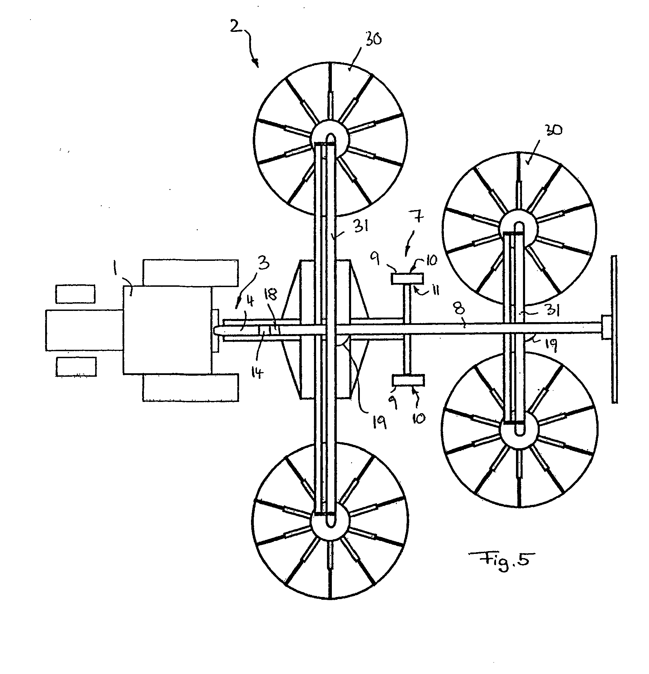

- Fig. 5:: eine schematische Draufsicht auf ein von einem Schlepper gezogenes landwirtschaftliches Anbaugerät in Form eines Kreiselschwaders mit einem Fahrwerk, das Laufräder aufweist, die von einem Radantrieb mit einem Elektromotor antreibbar sind, und

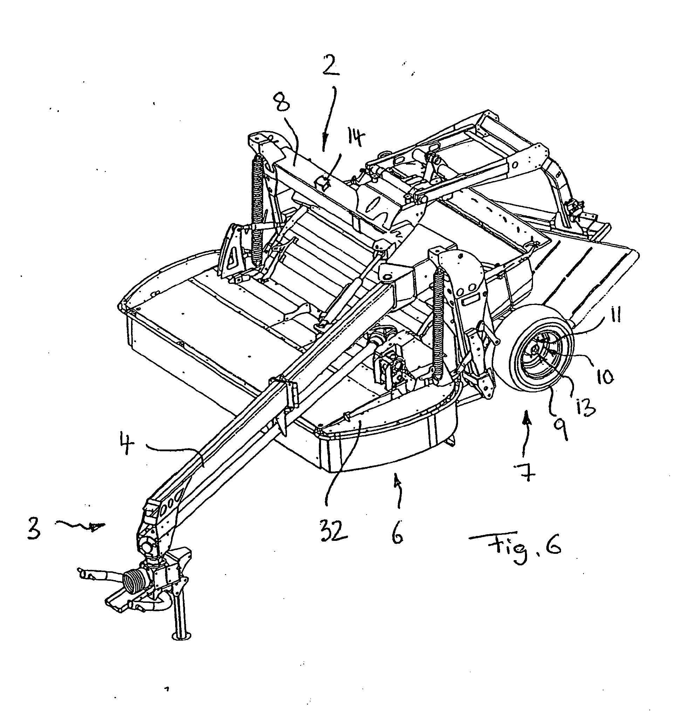

- Fig. 6:: eine schematische perspektivische Ansicht eines an einen Schlepper anbaubaren landwirtschaftlichen Anbaugeräts in Form einer Mähmaschine, die ein Fahrwerk mit Laufrädern aufweist, die von einem Radantrieb mit einem Elektromotor antreibbar sind.

Das in Fig. 1 gezeigte Anbaugerät (2) ist mittels einer Anbauvorrichtung (3) heckseitig an einen Schlepper (1) anbaubar, um von diesem gezogen zu werden. Die Anbauvorrichtung (3) umfasst hierbei in der gezeichneten Ausführung eine Knickdeichsel (4), die einerseits schwenkbar am Schlepper (1) angelenkt und andererseits mit einem Maschinenrahmen (8) verbunden ist.

Das Anbaugerät (2) nach Fig. 1 ist als Bestellkombination ausgebildet und umfasst mehrere Bodenbearbeitungsaggregate (6) in Kombination mit einer Sävorrichtung (20). Die genannten Bodenbearbeitungsaggregate (6) umfassen zwei Scheibeneggeneinheiten (21), die am Maschinenrahmen (8) aufgehängt sind sowie ein nachlaufendes Walzenelement (22) beispielsweise in Form einer Packerradwalze. Über das genannte Walzenelement (22) ist der Maschinenrahmen (8) und damit das Anbaugerät (2) am Boden abgestützt, so dass das genannte Walzenelement (22) das Fahrwerk (7) bzw. dessen Radelement (9) zur Abstützung des Anbaugeräts (2) auf dem Boden bildet.

Der Maschinenrahmen (8) trägt in der gezeichneten Ausführungsform einen Saatguttank (24), von dem aus Saatgut über Saatgutleitungen (25) zu Ausbringelementen (26) in Form von Säscharen geleitet wird.

Das genannte Walzenelement (22) ist mit einem Radantrieb (10) versehen, der einen Elektromotor (11) umfasst, der vorteilhafterweise im Inneren des Walzenkorpus aufgenommen sein kann. Der genannte Motor (11) kann hierbei über eine Energieleitung (27) vom Schlepper (1) her mit Energie versorgt werden. Eine Steuervorrichtung (14), die beispielsweise in Form eines am Anbaugerät (2) vorgesehenen Jobrechners ausgebildet sein kann, steuert das Antriebsmoment und die Drehzahl des genannten Radantriebs (10) in geeigneter Weise, insbesondere in der zuvor bzw. eingangs geschilderten Weise, um den Radschlupf am Schlepper (1) zu reduzieren bzw. zu verhindern und die Spurtreue der Schlepper-Anbaugeräte-Kombination zu verbessern.

Fig. 2 zeigt ein Anbaugerät (2), das über eine Anbauvorrichtung (3) in Form eines Anbaubocks (5) und eine Dreipunktanlenkung an den Schlepper (1) heckseitig angebaut ist, um vom Schlepper (1) gezogen zu werden. Die Anbauvorrichtung (3) umfasst einen Maschinenrahmen (8), der ein Bodenbearbeitungsaggregat (6) in Form von Grubberzinken trägt. Der genannten Grubbereinheit nachlaufend ist ein Walzenelement (22) vorgesehen, welches ebenfalls von einem Radantrieb (10) umfassend einen vorzugsweise elektrischen Motor (11) angetrieben werden kann. Eine Steuervorrichtung (14) zur Steuerung des Antriebsmoments und der Drehzahl des Motors (11) ist bei dieser Ausführung schlepperseitig angeordnet, so dass der Radantrieb (10) des Anbaugeräts (2) vom Schlepper her gesteuert werden kann.

Das in Fig. 3 gezeigte Anbaugerät (2) umfasst einen Maschinenrahmen (8), der über eine Anbauvorrichtung (3) umfassend einen mit dem Maschinenrahmen (8) verbundenen Anbaubock (5) heckseitig an einen Schlepper angebaut werden kann.

Der Maschinenrahmen trägt Bodenbearbeitungsaggregate (6) in Form von Scheibeneggen (21), die in zwei Reihen quer zur Fahrtrichtung hintereinander angeordnet sind.

Den beiden Scheibeneggenreihen nachlaufend angeordnet ist ein Walzenelement (22), das das Radelement (9) eines Fahrwerks (7) bildet, mittels dessen sich das Anbaugerät (2) am Boden abstützt.

Das genannte Walzenelement (22) kann von einem Radantrieb (10) angetrieben werden, der wie die vorhergehenden Ausführungsformen einen elektrischen Motor (11) umfasst, der in der Radnabe und/oder im Innenraum des Walzenelements (22) angeordnet werden kann. Die Versorgung mit elektrischer Energie kann vom Schlepper (1) her erfolgen, wobei die Steuerung des Motors (11) von einer Steuervorrichtung (14) bewerkstelligt wird, die beispielsweise in Form eines Jobrechners an dem Anbaugerät (2) vorgesehen sein kann.

Die Steuervorrichtung (14) umfasst in der gezeichneten Ausführung nach Fig. 3 Erfassungsmittel (16) in Form eines Hangneigungssensors zur Erfassung der Hangneigung sowie Erfassungsmittel (17) in Form eines optischen Sensors zur Erfassung der Arbeitstiefe der Scheibenegge (21). In Abhängigkeit der erfassten Hangneigung und der erfassten Arbeitstiefe wird die Antriebsleistung des Motors (11) gesteuert.

Fig. 4 zeigt ein Anbaugerät (2) in Form eines Ladewagens, der einen von einem Maschinenrahmen (8) getragenen Erntegutspeicher (28) besitzt, in den mittels einer Aufsammelvorrichtung (29), die eine Pickup mit Stachelwalze umfassen kann, Erntegut vom Boden aufgesammelt und gefördert werden kann.

Der Maschinenrahmen (8) wird von einem Fahrwerk (7) am Boden abgestützt, das in der gezeichneten Ausführung zweiachsig ausgebildet ist und mehrere Radelemente (9) umfasst.

In den Radnaben (13) der genannten Radelemente (9) sind Radantriebe (10) in Form von Radnabenantrieben integriert. Die genannten Radantriebe (10) umfassen hierbei vorteilhafterweise einen elektrischen Motor (11), der ggf. mit einem Getriebe in der genannten Radnabe (13) angeordnet ist.

Die genannten Radnabenantriebe werden über nicht gezeigte Energieleitungen vom Schlepper (1) her mit Strom versorgt und von einer Steuervorrichtung (14) in Form eines Jobrechners am Ladewagen gesteuert. Die genannte Steuervorrichtung (14) ist in der gezeichneten Ausführung hierbei einerseits mit einem Erfassungsmittel (16) in Form eines Hangneigungssensors zur Erfassung der Hangneigung sowie einem Erfassungsmittel (15) zur Erfassung des Radschlupfs am Schlepper (1) verbunden, um das Antriebsmoment sowie die Drehzahl der Radnabenantriebe (10) in Abhängigkeit der Hangneigung und des Schlepperradschlupfes zu steuern insbesondere in der eingangs näher erläuterten Art und Weise.

Wie Fig. 4 zeigt, ist der Ladewagen mittels einer Deichsel (4) am Schlepper (1) anbaubar.

Fig. 5 zeigt ein Anbaugerät (2) in Form einer Heuwerbungsmaschine, die als Kreiselschwader ausgebildet ist. In der gezeichneten Ausführungsform umfasst der Kreiselschwader hierbei mehrere Rechkreisel (30), die die Arbeitsaggregate (6) des Anbaugeräts (2) bilden.

Die genannten Arbeitsaggregate (6) sind hierbei von einem zentralen Maschinenrahmen (8) seitlich auskragend an Tragarmen (31) angeordnet. Die genannten Tragarme (31) können aus der in Fig. 5 gezeigten, abgesenkten Arbeitsstellung in angehobene Vorgewende- und Transportstellungen angehoben werden, um die Arbeitsbreite des Anbaugeräts (2) für den Straßentransport zu reduzieren.

Der Maschinenrahmen (8) ist hierbei mittels einer Anbauvorrichtung (3) umfassend eine Deichsel (4) am Schlepper (1) heckseitig angebaut und durch ein Fahrwerk (7) mit mehreren Radelementen (9) am Boden abgestützt. In der gezeichneten Ausführung ist das Fahrwerk (7) hierbei zwischen den vorderen Rechkreiseln und den hinteren Rechkreiseln angeordnet, vgl. Fig. 5.

Die Radelemente (9) des Fahrwerks (7) können hierbei durch Radantriebe (10) jeweils umfassend einen elektrischen Motor (11) angetrieben werden, wobei auch hier die Radantriebe (10) in Form von Radnabenantrieben ausgebildet und in die Radnabe (13) der Radelemente (9) integriert sein können.

Zur Steuerung der Radantriebe (10) ist auch bei der Ausführung nach Fig. 5 eine elektronische Steuervorrichtung (14) vorgesehen, die als Jobrechner am Anbaugerät (2) platziert sein kann und ähnlich den vorerläuterten Ausführungen die Hangneigung und/oder den Radschlupf und/oder die Zugkraft des Schleppers (1) überwachen bzw. ermitteln kann, um in Abhängigkeit dieser Parameter die Antriebsleistung der Motoren (11) zu steuern.

Zusätzlich besitzt die Steuervorrichtung (14) in der Ausführung nach Fig. 5 Erfassungsmittel (19), mittels derer erfasst werden kann, ob sich das Anbaugerät (2) im Straßentransportbetrieb oder im Feld-Arbeitsbetrieb befindet. Beispielsweise können die Erfassungsmittel (19) Stellungssensoren umfassen, mittels derer die angehobene und abgesenkte Stellung der Tragarme (31) der Rechkreisel (30) unterschieden werden kann.

In Abhängigkeit der Betriebssituation können die Motoren (11) der Radantriebe (10) als Generator betrieben werden, insbesondere dann, wenn sich das Anbaugerät (2) im Straßentransportbetrieb befindet. Die Steuervorrichtung (14) kann hierbei eine Generator-Betriebssteuervorrichtung (18) umfassen, die mit den vorgenannten Erfassungsmitteln (19) verbunden ist und dann, wenn Straßentransportbetrieb erfasst ist, den Generatorbetrieb und die Einspeisung des hierdurch erzeugten Stroms in das Bordnetz des Schleppers (1) bzw. dessen Batterie steuert.

Bei der Ausführung nach Fig. 6 ist das Anbaugerät (2) als Mähmaschine ausgebildet. An einem Maschinenrahmen (8) ist ein Mähwerk (32) aufgehängt, welches das Arbeitsaggregat (6) des Anbaugeräts (2) bildet. Der Maschinenrahmen (8) ist mittels eines Fahrwerks (7) umfassend zwei Radelemente (9) am Boden abgestützt und durch eine Anbauvorrichtung (3) umfassend eine Deichsel (4) heckseitig an einen nicht gezeigten Schlepper anbaubar.

Ähnlich der zuvor beschriebenen Ausführung können die Radelemente (9) von Radantrieben (10) angetrieben werden, die jeweils einen elektrischen Motor (11) umfassen. Vorteilhafterweise können die genannten Radantriebe (10) Radnabenantriebe sein, die in die Radnaben (13) der Radelemente (9) integriert sind. Über eine Steuervorrichtung (14) kann die Antriebsleistung der Radantriebe (10) ähnlich den vorangehenden Erläuterungen in Abhängigkeit verschiedener Betriebsparameter gesteuert werden.

## Patentansprüche

1. Landwirtschaftliches Anbaugerät, vorzugsweise in Form eines Ladewagens oder einer Walzen-Bestellkombination, mit einer Anbauvorrichtung (3) wie Anbaubock (5) oder Deichsel (4) zum Anbau an einen Schlepper (1), zumindest einem Arbeitsaggregat (6) zur Boden-, Ernte- und/oder Saatgutbearbeitung sowie einem Fahrwerk (7) mit zumindest einem Radelement (9) zur Abstützung am Boden, wobei zumindest ein Radantrieb (10) mit einem elektrischen und/oder druckfluidbetriebenen Motor (11) zum Antreiben des zumindest einen Radelements (9) vorgesehen ist, **dadurch gekennzeichnet, dass** eine Steuervorrichtung (14) zur Steuerung der Drehzahl und/oder des Antriebsmoments des Motors (11) des Radantriebs (10) in Abhängigkeit zumindest eines Gelände- und/oder Anbaugerätebetriebsparameters vorgesehen ist, wobei die Steuervorrichtung (14) Erfassungsmittel (17) zur Erfassung der Hangneigung und/oder einer Arbeitstiefe und/oder einer Spurtiefe und/oder eines Ladegewichts des Anbaugeräts sowie auf die genannten Erfassungsmittel (17) ansprechende Steuermittel zur Steuerung des Motors (11) hinsichtlich Drehzahl und/oder Antriebsmoment in Abhängigkeit der erfassten Hangneigung und/oder Arbeitstiefe und/oder der erfassten Spurtiefe und/oder des erfassten Ladegewichts aufweist.

2. Landwirtschaftliches Anbaugerät nach dem vorhergehenden Anspruch, wobei der Radantrieb (10) als Einzelradantrieb ausgebildet und einem einzelnen Radelement (9) zugeordnet ist.

3. Landwirtschaftliches Anbaugerät nach einem der vorhergehenden Ansprüche, wobei der Radantrieb (10) in Form eines Radnabenantriebs ausgebildet ist, bei dem der Motor (11), ggf. mitsamt einem Getriebe, an der Radnabe (13) des Radelements (9) sitzend angeordnet, vorzugsweise in den Radnabenkorpus integriert ist.

4. Landwirtschaftliches Anbaugerät nach einem der vorhergehenden Ansprüche, wobei das Radelement (9) in Form eines Walzenelements, vorzugsweise Packerradwalze (12), ausgebildet ist.

5. Landwirtschaftliches Anbaugerät nach dem vorhergehenden Anspruch, wobei der Radantrieb (10) im Innenraum des Walzenelements aufgenommen ist.

6. Landwirtschaftliches Anbaugerät nach einem der vorhergehenden Ansprüche, wobei die Steuervorrichtung (14) Erfassungsmittel (15) zur Erfassung eines Schlepperradschlupfs und/oder einer Schlepperzugkraft sowie auf die genannten Erfassungsmittel (15) ansprechende Steuermittel zur Steuerung des Motors (11) hinsichtlich Drehzahl und/oder Antriebsmoment in Abhängigkeit des erfassten Schlepperradschlupfs und/oder der erfassten Schlepperzugkraft aufweist.

7. Landwirtschaftliches Anbaugerät nach einem der vorhergehenden Ansprüche, wobei eine Generator-Betriebssteuervorrichtung (18) zum Steuern des Motors (11) im Generatorbetrieb vorgesehen ist und Rückspeise-Steuermittel zum Steuern der Rückspeisung des vom Motor (11) generierten Stroms in ein Bordnetz oder einen Stromspeicher aufweist.

8. Landwirtschaftliches Anbaugerät nach dem vorhergehenden Anspruch, wobei die Generator-Betriebssteuervorrichtung (18) Erfassungsmittel (19) zur Erfassung eines Straßentransportzustands sowie auf die genannten Erfassungsmittel (19) ansprechende Generatorschaltmittel zum Umschalten des Motors (11) in den Generatorbetrieb dann, wenn das Anbaugerät sich im Straßentransportbetrieb befindet, aufweist.
